Europäisches Patentamt

European Patent Office

Office européen des brevets

(19)

(11) **EP 0 977 295 A1**

(12) **EUROPÄISCHE PATENTANMELDUNG**

(43) Veröffentlichungstag:
**02.02.2000   Patentblatt 2000/05**

(51) Int Cl.$^7$: **H01M 8/06**, H01M 8/24

(21) Anmeldenummer: **99810577.9**

(22) Anmeldetag: **02.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **31.07.1998  EP 98810740**

(71) Anmelder: **Sulzer Hexis AG**
**8400 Winterthur (CH)**

(72) Erfinder: **Schuler, Alexander, Dr.**
**8484 Weisslingen (CH)**

(74) Vertreter: **Sulzer Management AG**
**KS/Patente/0007,**
**Zürcherstrasse 12**
**8401 Winterthur (CH)**

(54) **Anlage mit Hochtemperatur-Brennstoffzellen**

(57)    Die Anlage (1) enthält Hochtemperatur-Brennstoffzellen (20), die planar ausgebildet in einem zentralsymmetrischen Stapel (2) angeordnet sind. Eine Zuführstelle (5) ist für einen gasförmigen oder flüssigen Brennstoff (50) vorgesehen. In einem Reformer (4) im Anschluss an die Zuführstelle ist der Brennstoff bei Anwesenheit von $H_2O$ und unter Zufuhr von Prozesswärme katalytisch zumindest teilweise in CO und $H_2$ umsetzbar. Ein Nachverbrennungsraum (6) befindet sich im Anschluss an Ausgangsstellen der Brennstoffzellen (20). Zwischen Zuführstelle und Nachverbrennungsraum besteht eine Rückführverbindung (61), über die Abgas (60', 70') zu der Zuführstelle rückführbar ist. Falls als Brennstoff kein Gas vorgesehen ist, umfasst die Zuführstelle ein Mittel zum Einspeisen eines flüssigen Brennstoffs, beispielsweise einen Zerstäuber.

Fig.1

**Beschreibung**

Die Erfindung betrifft eine Anlage mit Hochtemperatur-Brennstoffzellen gemäss Oberbegriff von Anspruch 1 sowie Verfahren zum Betreiben der Anlage.

Eine derartige Anlage umfasst eine Vorrichtung, wie sie aus der EP-A 0 780 917 (= P.6719) bekannt ist. Diese Vorrichtung enthält einen Zellenblock mit Brennstoffzellen, der von einer wärmedämmenden Hülle umgeben ist. Ein Nachverbrennungsraum befindet sich zwischen Hülle und Zellenblock. Ein Reformer für die Aufbreitung eines Brenngases (auch Prereformer genannt) ist in der Hülle angeordnet. Er ist mit einem Wärmetauscher verbunden, mittels dem ihm für die endothermen Reformierungsprozesse Wärme aus Abgasen zuführbar ist.

Bei der Reformierung des Brenngases, das in vielen Anwendungsfällen zur Hauptsache aus Methan besteht, wird dieses bei Anwesenheit von $H_2O$ und unter Zufuhr von Prozesswärme katalytisch zumindest teilweise in CO und $H_2$ umgesetzt. Statt eines gasförmigen Brennstoffes kann auch ein flüssiger vorgesehen werden, wobei allerdings die Verwendung eines flüssigen Brennstoffs mit zusätzlichen Problemen verbunden sein kann, indem dieser in geeigneter Weise in den Reformer eingespeist werden muss.

Es ist Aufgabe der Erfindung, eine Anlage mit Hochtemperatur-Brennstoffzellen zu schaffen, bei der das für die Reformierung des Brennstoffs benötigte Wasser $H_2O$ in einer für das Gesamtverfahren vorteilhaften Weise gewonnen und der Reformierung zugeführt wird. Diese Aufgabe wird durch die in Anspruch 1 definierte Anlage gelöst. Es sind zusätzlich auch Massnahmen vorzusehen, durch die eine Russbildung bei kritischen Brennstoffen, insbesondere bei flüssigen Brennstoffen (die Kohlenwasserstoffe $C_nH_{2n+2}$ mit n > 5 enthalten), möglichst weitgehend verhindert wird. Mittels Abgas, das dem Nachverbrennungsraum entnehmbar ist und das in einer ausreichend grossen Menge rückgeführt wird, lässt sich auch diese weitere Aufgabe lösen.

Die erfindungsgemässe Anlage enthält Hochtemperatur-Brennstoffzellen, die planar ausgebildet in einem zentralsymmetrischen Stapel angeordnet sind. Eine Zuführstelle ist für einen gasförmigen oder flüssigen Brennstoff vorgesehen. In einem Reformer im Anschluss an die Zuführstelle ist der Brennstoff bei Anwesenheit von $H_2O$ und unter Zufuhr von Prozesswärme katalytisch zumindest teilweise in CO und $H_2$ umsetzbar. Ein Nachverbrennungsraum befindet sich im Anschluss an Ausgangsstellen der Brennstoffzellen. Zwischen Zuführstelle und Nachverbrennungsraum besteht eine Rückführverbindung, über die Abgas zu der Zuführstelle rückführbar ist. Falls als Brennstoff kein Gas vorgesehen ist, umfasst die Zuführstelle ein Mittel zum Einspeisen eines flüssigen Brennstoffs, beispielsweise einen Zerstäuber.

Dem Brennstoff wird mit dem rückgeführten Abgas $O_2$ zugeführt. Dieses hat im Reformer eine partielle Oxidation zur Folge, durch die aus Kohlenwasserstoffen $C_nH_{2n+2}$ die Produkte CO und $H_2$ gebildet werden. Die freiwerdende Wärme wird bei der parallel laufenden Reformierung absorbiert und somit genutzt. Durch die partielle Oxidation wird vorteilhafterweise eine Russbildung gehemmt.

Das im rückgeführten Abgas zusätzlich enthaltene $CO_2$ ergibt wie $H_2O$ ebenfalls eine Reformierung der Kohlenwasserstoffe zu CO und $H_2$.

Die abhängigen Ansprüche 2 bis 6 beziehen sich auf vorteilhafte Ausführungsformen der erfindungsgemässen Anlage. Gegenstand der Ansprüche 7 bis 9 ist ein Verfahren zum Betreiben dieser Anlage.

Nachfolgend wird die Erfindung anhand der Zeichnungen erläutert. Es zeigen:

Fig. 1    eine erfindungsgemässe Anlage mit Hochtemperatur-Brennstoffzellen, sehr schematisch dargestellt,

Fig. 2    einen Ausschnitt der Anlage mit einer quergeschnittenen Brennstoffzelle,

Fig. 3    eine zweite Ausführungsform einer Anlage mit Abgasrückführung,

Fig. 4    eine Zuführstelle für flüssigen Brennstoff,

Fig. 5    einen Ausschnitt einer gasdurchlässigen Struktur, die als Katalysatorträger eines Reformers für flüssige Brennstoffe verwendbar ist und

Fig. 6    eine Tabelle mit Zahlenwerten für die Enthalpien, die bei den $H_2O$- sowie $CO_2$-Reformierungsprozessen und der partiellen Oxidation mit den Kohlenwasserstoffen $C_nH_{2n+2}$, n = 1, 4, 16 bzw. 20, aufgenommen oder abgegeben werden.

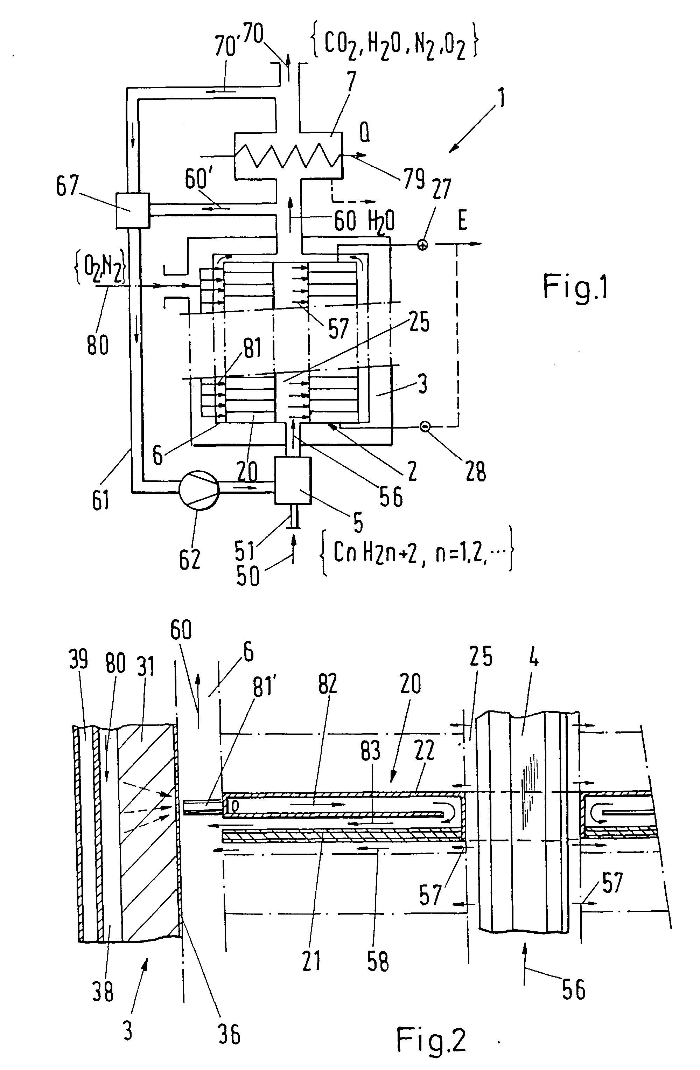

Die Anlage 1 der Fig. 1 umfasst folgende Komponenten: einen Stapel 2 mit planaren, ringförmigen Brennstoffzellen 20 und Polen 27, 28 zur Abgabe einer elektrischen Energie E; eine Hülle 3, die einen nicht dargestellten inneren Aufbau aufweist, mittels dem während des Betriebs Umgebungsluft 80, 81 vorgewärmt und gleichmässig verteilt dem Zellstapel 2 zugeführt wird; ein Nachverbrennungsraum 6 zwischen Zellstapel 2 und Hülle 3, aus dem Abgas 60, 70 über einen Wärmetauscher 7 (Abgabe von Heizwärme Q an ein Wärmeträgermittel 79 eines Wasserkreislaufs) abgeführt wird; ein Mischorgan 67, in dem heisses Abgas 60' mit abgekühltem Abgas 70' zusammengeführt wird, eine Rückführleitung 61 für das Abgas und ein Ventilator 62; ferner ein Anlagenteil 5, in dem Brennstoff 50 (Zuführleitung 51) mit dem rückgeführten Abgas der Leitung 61 vermischt wird. Im Anschluss an diese Zuführstelle 5 wird das Gemisch durch Reformierung aufbereitet und der aufbereitete Brennstoff 57 in die Zellen 20 eingespeist, die er als Gas 58 durchströmt.

Die Reformierung ist ein endothermer Prozess. Mit Vorteil wird ein Reformer 4 - siehe Fig. 2 - in einem zentralen Hohlraum 25 des Zellstapels 2 längs der Stapelachse angeordnet und so ausgebildet, dass von den Zellen 20 abgegebene Strahlungswärme durch ihn aufgenommen werden kann.

Fig. 2 zeigt weitere Details: Die Hochtemperatur-Brennstoffzelle 20 umfasst eine elektrochemisch aktive Platte 21 (mit zwei Elektrodenschichten und eine dazwischen liegende Feststoffelektrolytschicht) und einen Interkonnektor 22, der die elektrochemisch aktiven Platten 21 benachbarter Zellen 20 elektrisch leitend verbindet. Der Interkonnektor 22 ist als Wärmetauscher für die Aufheizung von durch Zuführleitungen 81' eingespeiste Luft 82 ausgebildet. Die aufgeheizte Luft 83 fliesst parallel zum Gas 58 radial nach aussen. Bestandteile des Gases 58, die in der Zelle 20 nicht reagiert haben, werden nach Vereinigung mit dem Luftstrom 83 im Nachverbrennungsraum 6 verbrannt. Der ringspaltförmige Raum 6 ist von einer luftdurchlässigen Wand 31, die auf der Innenseite mit einer Schicht 36 abgedichtet ist, umschlossen. Über einen zweiten ringspaltförmigen Raum 38 wird Luft 80 auf die Wand 31 verteilt, in dieser vorgewämt und durch die Leitungen 81' in die Interkonnektoren 22 eingespeist. Die Hülle, die die Wand 31 und Verteilerraum 38 umfasst, wird gegen aussen durch eine evakuierte, ringspaltförmige Kammer 39 abgeschlossen.

Beim Betreiben der Anlage 1 finden in den Brennstoffzellen 20 stromliefernde und Abgas sowie Abwärme bildende Prozesse statt. In den Reformer 4 bzw. 54 rückgeführtes Abgas 60', 70' enthält $H_2O$, $CO_2$, $O_2$ und $N_2$. Die Reformierung des Brennstoffs 50, der Kohlenwasserstoffe z. B. $C_nH_{2+2n}$, mit n = 1, 2, ..., enthält, umfasst endotherme Reaktionen, wie

$$CH_4 + H_2O \rightarrow CO + 3H_2,$$

$$C_nH_{2n+2} + n\, H_2O \rightarrow n\, CO + (2n+1)\, H_2,$$

$$CH_4 + CO_2 \rightarrow 2\, CO + 2\, H_2.$$

Parallel zu diesen Reaktionen finden partielle Oxidationen, also exotherme Reaktionen,

$$C_nH_{2n+2} + n/2\, O_2 \rightarrow n\, CO + (n+1)\, H_2$$

statt. Die bei den partiellen Oxidationen frei werdende Wärme sowie Abwärme der stromliefernden Prozesse der Brennstoffzellen liefern die Prozesswärme für die Reformierung.

Mit Vorteil wird nur eine minimale Menge an Abgas 60', 70' zu den Reformierungsprozessen rückgeführt. Falls das Material der Gaselektroden in den Brennstoffzellen 20 für eine Reformierung geeignet ist, müssen die Kohlenwasserstoffe nicht vollständig, insbesondere nur zu 10 bis 90%, umgesetzt werden.

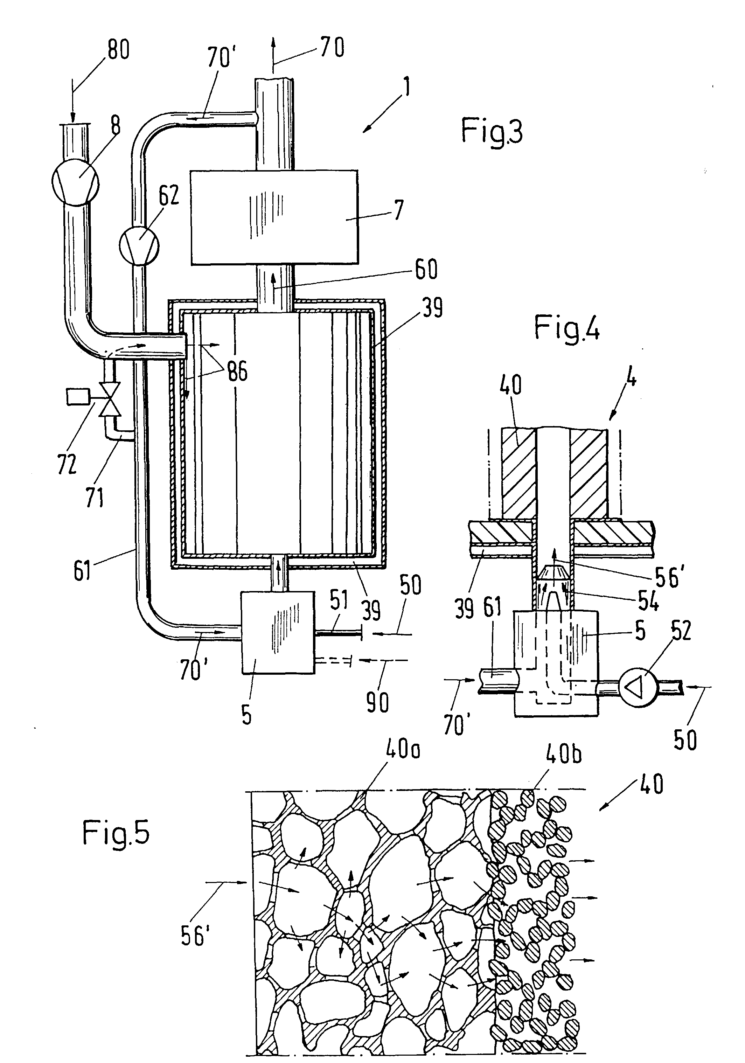

Fig. 3 zeigt eine Anlage 1, bei der ein Teil des rückgeführten Abgases 70' zur Umgebungsluft 80 zugemischt wird. Die mit einem Gebläse 8 geförderte Umgebungsluft 80 dient den stromliefernden Prozessen als $O_2$-abgebendes und als abwärmeaufnehmendes Medium. Die geförderte Menge liefert einen Überschuss an $O_2$ (bezogen auf die für die Prozesse benötigte stöchiometrische Menge).

Mit dem durch eine Leitung 71 sowie ein Ventil 72 zugemischten Abgas 70' wird der Anteil an $O_2$ in der durch die Zellen 20 strömenden Luft 58 reduziert, so dass auch für das gebildete Abgas 60 eine entsprechende Reduktion des $O_2$-Gehalts resultiert. Dies ist vorteilhaft, da mit dem rückgeführte Abgas 70' weniger $O_2$ in den Reformer eingespeist wird und somit dank einer Reduktion des Umsatzes durch die partiellen Oxidationen der Wirkungsgrad der Anlage 1 verbessert wird. Dem rückgeführten Abgas 70' kann wie im ersten Ausführungsbeispiel ebenfalls heisses Abgas 60' zugemischt werden (in Fig. 3 nicht dargestellt).

Der Wärmetauscher 7 kann einen Zusatzbrenner umfassen (nicht dargestellt). In einem solchen Zusatzbrenner anschliessend an den Nachverbrennungsraum 6, der zur Deckung eines erhöhten Wärmebedarfs vorgesehen sein kann, ist mit zusätzlichem Brennstoff und dem Abgas 60, das $O_2$ enthält, eine weitere Verbrennung durchführbar. Es kann auch nur ein Teil des Abgases 60 für eine solche zusätzliche Verbrennung verwendet werden.

Fig. 4 zeigt eine Zuführstelle 5 für einen flüssigen Brennstoff 50, der mit einer Pumpe 52 eingespeist wird. In einer Düseneinrichtung 54 wird der Brennstoff 50 versprüht und mit dem rückgeführten Abgas 70' (oder 70' und 60') vermischt. Das erzeugte Gemisch, ein Sprühnebel 56', wird in den Reformer 4 verteilt, der sich im zentralen Hohlraum 25 des Zellstapels 2 (siehe Figuren 1 und 2) befindet. Im rohrförmige Reformer 4 wird der Sprühnebel 56' in einer gasdurchlässigen, Katalysatoren tragenden Struktur 40 aufbereitet (Reformierung, partielle Oxidation). Diese Struktur 40, die als Ausschnitt in Fig. 5 dargestellt ist, umfasst in konzentrischer Anordnung eine innere Zone 40a und eine äussere Zone 40b. Die äussere Zone 40b ist gleichmässig ausgebildet und erzeugt einen wesentlich grösseren radialen Strömungswiderstand als die innere. Die innere Zone 40a ist als Tröpfchenabscheider ausgebildet. Dort geht die flüssige Phase des Brennstoffs 50 durch Verdampfung oder aufgrund von chemischen Reaktionen in Gasform über. In der äusseren Zone 40b wird die Aufbereitung fortgesetzt; gleichzeitig erfolgt durch die dichtere Zone 40b eine gleichmässige Verteilung des aufbreiteten Gases 57' auf die einzelnen Brennstoffzellen 20.

Als Katalysator für die Reformierung und/oder die partielle Oxidation kommen beispielsweise folgende Stoffe in Frage: Platin, Palladium, Ruthenium, Rhodium und Nickel oder ein Gemisch von zwei oder mehr dieser Stoffe ist. Nickel ist allerdings für die partielle Oxidation wegen Russbildung weniger geeignet.

Bei schwer zu handhabenden Kohlenwasserstoffen (Benzin, Heizöl, Rapsöl) kann ein zusätzlicher Wassereinlass (Bezugszeichen 90 in Fig. 3) erforderlich sein, um die Gefahr der Kohlenstoffabscheidung, d.h. Russbildung, ausschalten zu können. Durch zusätzlichen Wassereinlass kann praktisch jedes beliebige Verhältnis der Reaktionen Reformierung und partielle Oxidation zueinander eingestellt werden. Da dieses Verhältnis je nach Brennstoff unterschiedlich ist, kann das Verfahren optimal auf den jeweiligen Brennstoff angepasst werden. Bei Brennstoffen, die nur wenig zur Russbildung neigen (Erdgas, Biogas, Methanol), kann auf eine zusätzliche Wasserversorgung verzichtet werden.

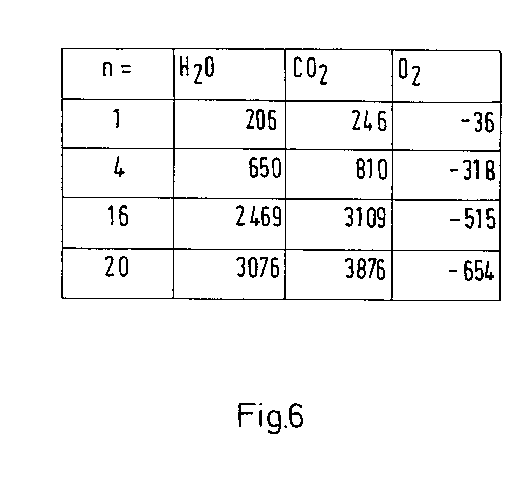

In Fig. 6 sind in Tabellenform Zahlenwerte für die Enthalpien (Einheit ist kJ/mol) zusammengestellt, die bei den endothermen $H_2O$- sowie $CO_2$-Reformierungsprozessen (positive Enthalpiewerte) und der partiellen Oxidation (negative Enthalpiewerte) mit den Kohlenwasserstoffen $C_nH_{2n+2}$, n = 1, 4, 16 bzw. 20, aufgenommen oder abgegeben werden.

Der Stickstoffanteil im rückgeführten Abgas hat eine Verdünnung des Brenngases zur Folge. Diese hat keinen gravierend negativen Einfluss auf die elektrochemische Leistungsfähigkeit der Anlage. Der Stickstoffanteil hat sogar eine positive Wirkung, da er die Russbildung vermindert.

Der für die Rückführung des Abgases vorgesehene Ventilator 62 (Fig.3) kann durch einen Injektor ersetzt werden, wenn ein gasförmiger Brennstoff zur Verfügung steht, der einen ausreichend grossen Druck aufweist. Mit einem solchen Brennstoff lässt sich im Injektor ein Treibstrom erzeugen, mit dem Abgas ansaugbar und vermischt mit dem Brennstoff in den Reformer einspeisbar ist.

Die beschriebenen Ausführungsbeispiele betreffen Anlagen, bei denen sich der Reformer im Inneren des Zellenblocks befindet. Die Erfindung bezieht sich jedoch auch auf Anlagen, bei denen der Reformer ausserhalb des Zellenblocks aber noch innerhalb der Hülle (wie in der eingangs genannten EP-A 0 780 917) oder ganz ausserhalb der Hülle angeordnet ist, beispielsweise im Anlagenteil 5 der Fig. 1.

**Patentansprüche**

1. Anlage (1) mit Hochtemperatur-Brennstoffzellen (20), mit einer Zuführstelle (5) für einen Brennstoff (50), mit einem Reformer (4) im Anschluss an die Zuführstelle, in welchem der Brennstoff bei Anwesenheit von H20 und unter Zufuhr von Prozesswärme katalytisch zumindest teilweise in CO und H2 umsetzbar ist, und mit einem Nachverbrennungsraum (6) im Anschluss an Ausgangsstellen der Brennstoffzellen (20),
dadurch gekennzeichnet, dass zwischen Zuführstelle und
Nachverbrennungsraum eine Rückführverbindung (61) besteht, über die Abgas (60', 70') zu der Zuführstelle rückführbar ist und dass, falls als Brennstoff kein Gas vorgesehen ist, die Zuführstelle ein Mittel zum Einspeisen eines flüssigen Brennstoffs, beispielsweise einen Zerstäuber, umfasst.

2. Anlage nach Anspruch 1, dadurch gekennzeichnet, dass anschliessend an den Nachverbrennungsraum (6) ein Wärmetauscher (7) angeordnet ist, in dem Abwärme (Q), die mit Abgas (60) aus dem Nachverbrennungsraum transportiert wird, an ein Wärmeträgermittel (79), insbesondere an Wasser, übertragbar ist und dass zumindest ein Teil der Rückführverbindung (61) des Abgases (60', 70') an diesen Wärmetauscher angeschlossen ist.

3. Anlage nach Anspruch 2, dadurch gekennzeichnet, dass in der Rückführverbindung (61) zwischen Wärmetauscher (7) und Zuführstelle des Brennstoffs (5, 54) ein Ansaugmittel (62), beispielsweise ein Ventilator, angeordnet ist.

4. Anlage nach Anspruch 3, dadurch gekennzeichnet, dass in der Verbindung zwischen Wärmetauscher (7) und Ansaugmittel (62) ein Mischorgan (67) angeordnet ist, mit welchem heisses Abgas (60') zu Abgas (70') aus dem Wärmetauscher zumischbar ist.

5. Anlage nach einem der Ansprüche 1 bis 4, dadurch gekennzeichnet, dass zwischen Nachverbrennungsraum (6) und Wärmetauscher (7) ein Zusatzbrenner angeordnet ist, in dem mit zumindest einem Teil des Abgases (60) des Nachverbrennungsraums und zusätzlichem Brennstoff eine weitere Verbrennung durchführbar ist.

6. Anlage nach einem der Ansprüche 1 bis 5, dadurch gekennzeichnet, dass die Brennstoffzellen (20) einen zentralsymmetrischen Stapel (2) bilden, in den über einen längs der Stapelachse angeordneten zentralen Hohlraum (25) der im Reformer (4, 54) aufbereitete Brennstoff (57) in die Brennstoffzellen einspeisbar ist, und dass der Reformer in dem zentralen Hohlraum angeordnet ist, derart, dass die für die Reformierung benötigte Prozesswärme über Strahlung von den Brennstoffzellen auf den Reformer übertragbar ist.

7. Verfahren zum Betreiben einer Anlage (1) gemäss einem der Ansprüche 1 bis 6 zum Durchführen von stromliefernden und Abgas (60) sowie Abwärme bildenden Prozessen, dadurch gekennzeichnet, dass im Reformer (4, 54) rückgeführtes Abgas (60', 70'), das $H_2O$, $CO_2$, $O_2$ und $N_2$ enthält, mit Brennstoff (50), der Kohlenwasserstoffe z. B. $C_nH_{2+2n}$, mit n = 1, 2, ..., enthält, durch endotherme Reaktionen, wie

$$CH_4 + H_2O \rightarrow CO + 3H_2,$$

$$C_nH_{2n+2} + n\,H_2O \rightarrow n\,CO + (2n+1)\,H_2,$$

$$CH_4 + CO_2 \rightarrow 2\,CO + 2\,H_2$$

und durch partielle Oxidationen, also exotherme Reaktionen,

$$C_nH_{2n+2} + n/2\,O_2 \rightarrow n\,CO + (n+1)\,H_2$$

reagieren, wobei Abwärme der stromliefernden Prozesse in den Brennstoffzellen (20) zumindest teilweise als Prozesswärme verwendet wird.

8. Verfahren nach Anspruch 7, dadurch gekennzeichnet, dass eine minimale Menge an Abgas (60', 70') zu den Reformierungsprozessen rückgeführt wird, wobei die Kohlenwasserstoffe nicht vollständig, insbesondere nur zu 10 bis 90%, umgesetzt werden.

9. Verfahren nach Anspruch 7 oder 8, dadurch gekennzeichnet, dass mit einem Gebläse (8) Umgebungsluft (80) den stromliefernden Prozessen als $O_2$-abgebendes und als abwärmeaufnehmendes Medium zugeführt wird, dass die zugeführte Menge an $O_2$ so eingestellt wird, dass ein Überschuss an $O_2$ - bezogen auf die für die Prozesse benötigte stöchiometrische Menge - höchstens 300% beträgt (?) und dass ein Teil des rückgeführten Abgases (60', 70') der Umgebungsluft (80) zugemischt wird.

10. Verfahren nach einem der Ansprüch 7 - 9, dadurch gekennzeichnet, dass bei der Reformierung zusätzliches Wasser (90) verwendet wird und dies in einer Menge, die auf die Wahl des Brennstoffs (50) abgestimmt ist.

$\{CO_2, H_2O, N_2, O_2\}$

70' 70

7

Q

79 27

67

60'

60 $H_2O$

E

Fig.1

$\{O_2, N_2\}$

57

25

80

81

3

6

2

28

20

56

61

5

62

51

50

$\{C_n H_{2n+2}, n=1,2,\cdots\}$

1

---

39 80 31

60

6

81'

82

20

25

4

83

22

57

57

21

58

56

38

3

36

Fig.2

Fig.3

Fig.4

Fig.5

| n = | $H_2O$ | $CO_2$ | $O_2$ |
|:---:|---:|---:|---:|
| 1 | 206 | 246 | -36 |
| 4 | 650 | 810 | -318 |
| 16 | 2469 | 3109 | -515 |
| 20 | 3076 | 3876 | -654 |

Fig.6

Europäisches
Patentamt

**EUROPÄISCHER RECHERCHENBERICHT**

Nummer der Anmeldung

EP 99 81 0577

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 266 861 A (WESTINGHOUSE ELECTRIC CORP) 11. Mai 1988 (1988-05-11)<br>* Spalte 3, Zeile 8 - Zeile 32; Abbildung 1 *<br>* Spalte 3, Zeile 54 - Spalte 4, Zeile 21; Anspruch 1 *<br>--- | 1,7,8,10 | H01M8/06<br>H01M8/24 |
| A | US 4 128 700 A (SEDERQUIST RICHARD A) 5. Dezember 1978 (1978-12-05)<br>* Spalte 3, Zeile 51 - Spalte 5, Zeile 34; Abbildungen 1,2 *<br>--- | 1 | |
| A | EP 0 654 838 A (SULZER INNOTEC AG) 24. Mai 1995 (1995-05-24)<br>* Spalte 3, Zeile 42 - Zeile 48; Abbildung 3 *<br>--- | 2 | |
| D,A | EP 0 780 917 A (SULZER INNOTEC AG) 25. Juni 1997 (1997-06-25)<br>* Spalte 4, Zeile 4 - Zeile 35; Abbildung 4 *<br>--- | 2,5 | |
| A | US 3 718 506 A (FISCHER W ET AL) 27. Februar 1973 (1973-02-27)<br>--- | | |
| P,A | WO 99 44252 A (HYDROGEN BURNER TECHN INC) 2. September 1999 (1999-09-02)<br>* Anspruch 1; Abbildungen 1A,1B *<br>* Seite 9, Zeile 7 - Zeile 15 *<br>----- | 1,2 | |

**RECHERCHIERTE SACHGEBIETE (Int.Cl.7)**

H01M

Der vorliegende Recherchenbericht wurde für alle Patentansprüche erstellt

| Recherchenort | Abschlußdatum der Recherche | Prüfer |
|---|---|---|
| DEN HAAG | 12. November 1999 | D'hondt, J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**      EP 99 81 0577

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-1999

| Im Recherchenbericht angeführtes Patentdokument | Datum der Veröffentlichung | Mitglied(er) der Patentfamilie | Datum der Veröffentlichung |
|---|---|---|---|
| EP 0266861 A | 11-05-1988 | US 4729931 A | 08-03-1988 |
| | | CA 1282823 A | 09-04-1991 |
| | | DE 3773614 A | 14-11-1991 |
| | | JP 1140563 A | 01-06-1989 |
| US 4128700 A | 05-12-1978 | AU 4134078 A | 31-05-1979 |
| | | BE 872260 A | 16-03-1979 |
| | | BR 7807538 A | 31-07-1979 |
| | | CA 1100179 A | 28-04-1981 |
| | | DE 2849151 A | 07-06-1979 |
| | | DK 526178 A | 27-05-1979 |
| | | ES 475368 A | 01-12-1979 |
| | | FR 2410371 A | 22-06-1979 |
| | | GB 2008841 A | 06-06-1979 |
| | | IT 1101132 B | 28-09-1985 |
| | | JP 54082636 A | 02-07-1979 |
| | | NL 7811048 A | 29-05-1979 |
| | | SE 7811783 A | 27-05-1979 |
| EP 0654838 A | 24-05-1995 | KEINE | |
| EP 0780917 A | 25-06-1997 | AU 706593 B | 17-06-1999 |
| | | AU 7538696 A | 26-06-1997 |
| | | JP 9180746 A | 11-07-1997 |
| | | US 5840437 A | 24-11-1998 |
| US 3718506 A | 27-02-1973 | KEINE | |
| WO 9944252 A | 02-09-1999 | KEINE | |

EPO FORM P0461

Für nähere Einzelheiten zu diesem Anhang : siehe Amtsblatt des Europäischen Patentamts, Nr. 12/82